(19) Europäisches Patentamt / European Patent Office / Office européen des brevets

(11) **EP 4 335 546 A1**

(12) **EUROPEAN PATENT APPLICATION**

(43) Date of publication:
**13.03.2024   Bulletin 2024/11**

(21) Application number: **22194987.8**

(22) Date of filing: **09.09.2022**

(51) International Patent Classification (IPC):
**B01J 23/882** (2006.01)    **B01J 37/00** (2006.01)
**B01J 37/04** (2006.01)    **B01J 38/60** (2006.01)
**C10G 45/08** (2006.01)

(52) Cooperative Patent Classification (CPC):
**B01J 37/04; B01J 23/85; B01J 23/882;
B01J 23/94; B01J 37/0009; B01J 37/0036;
B01J 38/485; B01J 38/60; C10G 45/08;** B01J 37/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Albemarle Catalysts Company B.V.
1030 BE Amsterdam (NL)**

(72) Inventors:
• **FREE, Harmannus Willem Homan
  Oosterhesselen (NL)**
• **MADAAN, Neetika
  Hoofddorp (NL)**
• **SILLESSEN, Thom Jacobus
  Amersfoort (NL)**

(74) Representative: **Hoyng Rokh Monegier B.V.
Rembrandt Tower, 30th Floor
Amstelplein 1
1096 HA Amsterdam (NL)**

(54) **PROCESS FOR PREPARING HYDROTREATING CATALYST**

(57)     The invention relates to a process for preparing a hydrotreating catalyst comprising providing a first hydrotreating catalyst, comprising a group VI metal and a group VIII metal, typically a spent regenerated catalyst, milling the first hydrotreating catalyst to form catalyst fines, mixing the catalyst fines with at least a binding agent to form a mixture; shaping the mixture to form a shaped mixture, heat treating the shaped mixture and preferably rejuvenating the shaped mixture wherein the mixture comprises at least 30 wt% of catalyst fines based on the dry weight of the mixture. The invention further relates to the hydrotreating catalyst obtainable by the process and to a process for hydrotreating a hydrocarbon feed using the hydrotreating catalyst.

EP 4 335 546 A1

**Description**

I. Field of the Invention

The invention relates to a process for the preparation of a hydrotreating catalyst. The invention further relates to hydrotreating catalysts obtainable by the process and to a process for hydrotreating a hydrocarbon feed using said hydrotreating catalysts.

II. Description of the Background Art

In general, the object of catalytically hydrotreating hydrocarbon-containing feeds is the removal of impurities. Common impurities are sulfur compounds and nitrogen compounds. The at least partial removal of such impurities from a feed will ensure that, when the final product is combusted, fewer sulfur oxides and/or nitrogen oxides harmful to the environment will be released. In addition, sulfur compounds and nitrogen compounds are toxic to many of the catalysts employed in the oil industry for converting feeds into ready-for-use products. Examples of such catalysts include cracking catalysts, hydrocracking catalysts, and reforming catalysts. It is therefore customary for feeds to be subjected to a catalytic hydrotreatment prior to their being processed in, say, a cracking unit.

Catalytic hydrotreatment implies contacting a feed with hydrogen at elevated temperature and pressure in the presence of a hydrotreating catalyst. In this process the sulfur compounds and nitrogen compounds present in the feed are converted into readily removable hydrogen sulfide and ammonia in processes referred to as hydrodesulfurization and hydrodenitrogenation, respectively.

In general, hydrotreating catalysts are composed of a carrier with deposited thereon a Group VI metal component and a Group VIII metal component. The most commonly employed Group VI metals are molybdenum and tungsten, while cobalt and nickel are the conventional Group VIII metals. Phosphorus may also be present in the catalyst. The hydrotreating catalysts are typically shaped, *e.g.* in the form of extrudates.

The prior art processes for preparing these catalysts are characterized in that a carrier material is composited with hydrogenation metal components, for example by impregnation, after which the composite is calcined to convert the metal components into their oxides. Before being used in hydrotreating, the catalysts are generally pre-sulfided to convert the hydrogenation metals into their sulfides.

The preparation of hydrotreating catalysts is an energy-intensive process and requires a high use of expensive natural resources like molybdenum, cobalt, nickel and aluminum.

A problem that can arise during catalyst preparation during catalyst shaping is the side-product formation of non-useable catalyst material. These non-useable materials include, for example, catalyst fines from, e.g. support production, fresh catalyst production, catalyst regeneration, or (damaged) extrudates that do not meet the length specifications that refiners need to prevent excessive pressure drop in their units. The formation of this non-useable catalytic material contributes to a non-efficient use of raw materials. It remains a need to improve the use of resources and to reduce the amount of waste.

Spent catalysts, *i.e.* used catalysts that have reacted in the hydrotreating process and are no longer viable for catalysis are typically disposed of to landfill sites. Regeneration of used catalysts, involving a heat treatment to burn off the coke and/or sulfur deposits, can revive the activity of the used catalyst only to a certain extent. In addition, mechanical attrition of the catalyst, mechanical damage during material processing and/or transport inside the equipment, and repeated harsh reaction conditions during the hydrotreating and/or during regeneration can compromise on the desired extrudate length. Reduction of extrudate length with successive hydrotreating/regeneration procedures inevitably leads to an increase in pressure drop in the reactor. This is unacceptable for refiners that are constrained by hydraulics and acceptable pressure profiles. Hence, the reactivation of used catalysts is limited and refiners still rely heavily on a continuous supply of freshly prepared hydrotreating catalysts.

In addition to regeneration, used catalysts may also undergo rejuvenation processes involving contacting the regenerated used catalyst with organic additives and/or acids. These rejuvenation processes can revive the activity of the used catalyst further. However, rejuvenation processes cannot be used endlessly to restore regenerated catalysts. After a certain number of rejuvenations the catalyst can no longer be used in the hydrotreatment process and faces recycling to reclaim the metals..

With ever increasing regulations and societal desire towards a more sustainable industry, there is a need for improved re-activation processes that allows catalysts to be viable for catalysis for a longer time. There is also a need for a process that allows for a more efficient recycling of metals to reduce the use of diminishing natural resources and to reduce waste ending up in landfills. There is also a need for reducing the carbon footprint in the oil industry.

It is an object of the invention to address at least one of the abovementioned problems.

It is also an objective of the invention to provide an improved process for re-activation of used hydrotreating catalysts or unusable fresh catalytic material and to provide a process for preparing an hydrotreating catalyst from such used hydrotreating catalysts or unusable fresh catalytic material.

In a further aspect, the invention relates to hydrotreating catalysts obtainable by the improved process and to their use in hydrotreating processes.

III. Brief Summary of the invention

While the invention is defined in the independent claims, further aspects of the invention are set forth in the dependent claims and the following description.

The above objects are met by providing a process for preparing a hydrotreating catalyst which process comprises

a. providing a first hydrotreating catalyst, comprising a group VI metal and a group VIII metal, selected from the group of fresh catalyst, regenerated catalyst, rejuvenated catalyst, fresh, regenerated, or rejuvenated catalyst fines, or mixtures thereof;

b. milling the hydrotreating catalyst to form catalyst fines unless the first hydrotreating catalyst already consists of fresh-, regenerated-, or rejuvenated catalyst fines or mixtures thereof;

c. mixing the catalyst fines with at least a binding agent to form a mixture, wherein optionally the mixing and milling is at least partially combined and wherein optionally first hydrotreating catalyst consisting of fresh-, regenerated-, or rejuvenated catalyst fines are added after milling during mixing;

d. shaping the mixture;

e. heat treating the shaped mixture;

wherein the mixture comprises at least 30 wt% of catalyst fines based on the dry weight of the mixture.

In a preferred embodiment, the process further comprises a step f. of contacting the heat-treated shaped mixture with a rejuvenating agent.

In a preferred embodiment, the process further comprises a step g. of contacting the heat-treated shaped mixture with a solution comprising group VI and/or group VIII metals,

The step of contacting the heat-treated shaped mixture with a solution comprising metals may take place before, during, or after contacting the heat-treated shaped mixture with a rejuvenating agent.

In a preferred embodiment, said solution comprises group VI and/or group VIII metals in an amount such that after contacting, the heat-treated shaped mixture comprises a metal concentration of at least 90 wt% of the metal concentration in the first hydrotreating catalyst, preferably at least 95 wt%, more preferably at least 98 wt%.

In a preferred embodiment, the step of contacting the heat-treated shaped mixture with a solution comprising group VI and/or group VIII metals takes place during step f and preferably the solution comprising group VI and/or group VIII metals also comprises the rejuvenating agent.

In a preferred embodiment, the first hydrotreating catalyst comprises a regenerated catalyst obtained by regenerating a spend catalyst.

According to another preferred embodiment, the mixture comprises at least 50 wt% of catalyst fines based on the dry weight of the mixture, preferably at least 60 wt%, more preferably at least 70 wt%, even more preferably at least 80 wt%, most preferably at least 90 wt%.

In another preferred embodiment, the binding agent comprises an inorganic oxide, preferably alumina or alumina-silica.

In a preferred embodiment, the binding agent comprises a material that is similar to a binding material in the first hydrotreating catalyst.

In another preferred embodiment, the first hydrotreating catalyst is milled to form catalyst fines having a mean particle size of less than 200 $\mu$m, preferably less than 100 $\mu$m, more preferably less than 50 $\mu$m, even more preferably less than 30 $\mu$m.

In a preferred embodiment the catalyst fines in the mixture have a D90 less than 500 $\mu$m, preferably less than 200 $\mu$m, more preferably less than 100 $\mu$m and even more preferably less than 80 $\mu$m.

In yet another preferred embodiment, the rejuvenating agent decreases the crystalline fraction of the metal oxides in the heat-treated shaped mixture.

In a preferred embodiment, the rejuvenating agent comprises a complexing agent, preferably a carboxylic acid comprising at least one carboxyl group and 1-20 carbon atoms.

In a most preferred embodiment, the complexing agent is citric acid or lactic acid.

In another preferred embodiment, the rejuvenating agent also comprises an organic additive, wherein the organic additive is preferably selected from the group of compounds comprising at least two hydroxyl groups and 2-10 carbon atoms per molecule and the ethers or polyethers of these compounds. In this context OH groups in carboxylic acid are not considered to be hydroxyl groups.

In another preferred embodiment, the heat-treated shaped mixture, after it has been contacted with a rejuvenating agent, is subjected to an ageing step.

The invention furthermore relates to a hydrotreating catalyst that is obtainable by the process according to the invention.

In a preferred embodiment, the hydrotreating catalyst that is obtainable by the process according to the invention comprises a total pore volume of 0.2 to 1.0 mL/g, preferably 0.3-0.6 mL/g.

The hydrotreating catalyst obtainable by the process according to the invention preferably has a typical macropore volume of 0.005-0.3 mL/g, preferably the macropore volume is less than 0.06 mL/g. Herein, pores with a diameter larger than 100 nm are considered macropores.

The hydrotreating catalyst obtainable by the process according to the invention preferably has a surface area of 100-300 $m^2$/g.

The invention also relates to a process for hydrotreating a hydrocarbon feed in which a hydrocarbon feed is contacted under hydrotreating conditions with a catalyst according to the invention, obtainable by the process according to the invention, which optionally has been dried and optionally has been (pre)sulfided before it is contacted with the hydrocarbon feed.

IV. Detailed description of the invention

The above objects are met by providing a process for preparing a hydrotreating catalyst which process comprises

a. providing a first hydrotreating catalyst, comprising a group VI metal and a group VIII metal, selected from the group of fresh catalyst, regenerated catalyst, rejuvenated catalyst, fresh, regenerated, or rejuvenated catalyst fines, or mixtures of the above;

b. milling the hydrotreating catalyst to form catalyst fines unless the first hydrotreating catalyst already consists of fresh-, regenerated-, or rejuvenated catalyst fines or mixtures thereof;

c. mixing the catalyst fines with at least a binding agent to form a mixture; wherein optionally the mixing and milling is at least partially combined and wherein optionally first hydrotreating catalyst consisting of fresh-, regenerated-, or rejuvenated catalyst fines are added after milling during mixing

d. shaping the mixture to form a shaped mixture;

e. heat treating the shaped mixture;

f. preferably contacting the heat-treated shaped mixture with a rejuvenating agent;

wherein the mixture comprises at least 30 wt% of catalyst fines based on the dry weight of the mixture.

The starting material for the process according to the invention is a first hydrotreating catalyst. The first hydrotreating catalyst comprises a group VI metal and a group VIII metal. As Group VI metals may be mentioned molybdenum, tungsten, and chromium, with molybdenum or tungsten being preferred. Molybdenum is especially preferred. Group VIII metals include nickel, cobalt, and iron. Nickel, cobalt, or their combination are preferred.

In hydrotreating catalysts, the group VI metal and group VIII metal content are generally calculated as their metal oxides. The metal content in the catalyst can be determined by X-ray fluorescence spectroscopy (XRF) or inductively coupled plasma spectroscopy (ICP). The content is calculated as the metal oxides expressed in weight percentage relative to the total dry weight of the catalyst.

The hydrotreating catalyst usually has a metal content in the range of 0.1 to 50 wt.%, calculated as oxides based on the overall weight of the catalyst. The Group VI metal component is generally present in an amount of 5-40 wt.%, calculated as trioxide, preferably 10-38 wt.%, more preferably 15-35 wt.%. The Group VIII metal component is generally present in an amount of 1-10 wt.%, preferably 2-8 wt.%, calculated as oxide. If so desired, the catalyst may also contain other components, such as phosphorus, halogens, for example fluorine, and boron. Particularly, the presence of phosphorus in an amount of 1-10 wt.%, calculated as $P_2O_5$, to improve the hydrodenitrogenation activity of the catalyst may be preferred.

In the hydrotreating catalyst, the metals are composited with a carrier. The catalyst carrier may comprise the conventional inorganic oxides, e.g., alumina, silica, silica-alumina, alumina with silica-alumina dispersed therein, silica-coated alumina, magnesia, zirconia, boria, and titania, as well as mixtures of these oxides. As a rule, preference is given to the carrier being of alumina, silica-alumina, alumina with silica-alumina dispersed therein, or silica-coated alumina. Special preference is given to alumina and alumina containing up to 10 wt.% of silica. A carrier containing a transition alumina, for example an eta, theta, or gamma alumina is preferred within this group, wherein a gamma-alumina carrier is most especially preferred.

The hydrotreating catalyst is employed in the hydrotreating process in the conventional manner in the form of spheres, pellets or extrudates. Examples of suitable types of extrudates have been disclosed in the literature (see, int. al., US 4 028 227).

The starting material may be a fresh hydrotreating catalyst. The term fresh refers to a catalyst that has not been used in the hydrotreating process yet. The fresh hydrotreating catalyst may be prepared according to the conventional catalyst preparation processes known to the skilled worker. Before being used in hydrotreating, the catalysts are generally presulfided to convert the metals into their sulfide form.

The fresh hydrotreating catalyst may also be prepared according to processes comprising further activation steps, for instance comprising steps wherein the catalyst is contacted with organic additives and/or acids.

However, the starting material of the process of the invention may also advantageously be a used hydrotreating catalyst which has been regenerated by removing coke therefrom. In this case the catalyst may or may not have contained an additive before its first use. The used hydrotreating catalyst may also have undergone further rejuvenation or activation steps involving contacting the regenerated used catalyst with organic additives and/or acids.

The used hydrotreating catalyst may have been used once in a hydrotreating process, but may also have undergone several cycles of hydrotreating followed by regeneration and/or rejuvenation steps.

Regeneration is carried out by contacting the used hydrotreating catalyst with an oxygen-containing gas under such conditions that after regeneration, the carbon content of the catalyst generally is below 3 wt.%, preferably below 2 wt.%, more preferably below 1 wt.%. After regeneration, the sulfur content of the catalyst generally is below 2 wt.%, preferably below 1 wt.%. Before the regeneration step, the carbon content of the catalyst generally is above 5 wt.%, typically between 5 and 25 wt.%. The sulfur content of the catalyst before the regeneration step generally is above 5 wt.%, typically between 5 and 20 wt.%.

The maximum catalyst temperature during the regeneration step will be governed by the properties of the catalyst to be regenerated and by process constraints, a higher maximum temperature being preferred in principle because this makes it possible to reduce the regeneration time. A long regeneration time equals a long residence time of the catalyst material in the regeneration reactor leading to breakage of the catalyst material. However, a high regeneration temperature carries the risk of forming large crystallites and metal sintering leading to a loss in metal surface area. Catalysts with a higher metal content will generally require a lower maximum catalyst temperature than catalysts with a lower metal content. Generally, the maximum catalyst temperature during the regeneration process is at most 650°C, preferably at most 575°C, more preferably at most 550°C, still more preferably at most 525°C.

The maximum catalyst temperature during the regeneration process generally is at least 300°C, preferably at least 350°C, more preferably at least 400°C, still more preferably at least 450°C.

It is noted that in this specification any temperature given relates to the temperature of the catalyst, except when explicitly indicated otherwise. The catalyst temperature can be determined in any way known to the skilled person, e.g., by way of appropriately placed thermocouples.

It is preferred for the regeneration step in the presence of oxygen to be carried out in two steps, namely a first lower-temperature step and a second higher-temperature step. In the first, lower-temperature step, the catalyst is contacted with an oxygen-containing gas at a temperature of 100 to 370°C, preferably 175 to 370°C. In the second, higher-temperature regeneration step, the catalyst is contacted with an oxygen-containing gas at a temperature of 300 to 650°C, preferably 320 to 550°C, still more preferably 350-525°C. The temperature during the second step is higher than the temperature of the first step discussed above, preferably by at least 10°C, more preferably by at least 20°C. The temperature ranges refer to the set temperature for the oxygen-containing gas. The determination of appropriate temperature ranges is well within the scope of the skilled person, taking the above indications into account.

It is preferred for the catalyst to be regenerated in a moving bed process, preferably, if applicable, at a bed thickness of 1-15 cm. In the context of the present specification, the term "moving bed" is intended to refer to all processes wherein the catalyst is in movement as compared to the unit, including ebullated bed processes, fluidised processes, processes in which the catalyst is rotated through a unit (e.g. roto-louvre), and all other processes wherein the catalyst is in movement.

The duration of the regeneration process including stripping will depend on the properties of the catalyst and the exact way in which the process is carried out, but will generally be between 0.25 and 24 hours, preferably between 0.5 and 16 hours.

EP1680486 describes a process for activating a hydrotreating catalyst which process comprises contacting a hydrotreating catalyst comprising a group VI metal oxide and a group VIII metal oxide with an acid and an organic additive, wherein the hydrotreating catalyst may be a used hydrotreating catalyst which has been regenerated or wherein the hydrotreating catalyst is a fresh hydrotreating catalyst.

The starting material of the process according to the invention, *i.e.* the first hydrotreating catalyst, may be milled to create catalyst fines. Suitable mills are known to the skilled worker and the choice of mill is not critical to the process according to the invention. Examples of suitable mills for this process are impact mill, ball mill or a jet mill, preferably an impact mill.

The starting material contains, or is preferably milled to achieve, particles with a mean particle size of less than 200 $\mu$m, preferably less than 100 $\mu$m, more preferably less than 50 $\mu$m, even more preferably less than 30 $\mu$m. The catalyst fines preferably have small particle size in view of binding them together in a suitable extrudate. A suitable extrude meets the requirements for minimum size, base crushing strength and maximum abrasion, which requirements are typically set by the refiner. A particle size distribution can be measured with, for example, a Malvern particle size analyzer. The D50 is the corresponding particle size when the cumulative percentage reaches 50%. D50 is also called as the median particle diameter or median particle size.

The D90 is the corresponding particle size when the cumulative percentage reaches 90%. In view of improved binding and more stable extrudates, it is preferred that the D90 is less than 500 $\mu$m, preferably less than 200 $\mu$m, more preferably less than 100 $\mu$m and even more preferably less than 80 $\mu$m.

The particle size of the catalyst fines can be achieved by applying the correct settings in the employed miller. Alternatively sieves may be used. Sometimes, mills have built-in sieves or wind-sifter to separate based on particle size.

In the process according to the invention, the first hydrotreating catalyst is milled, if required, to form catalyst fines, which are subsequently mixed with a binding agent. If the first hydrotreating catalyst consists of catalyst fines, it does not need to be milled, but generally it is preferred to also mill the catalyst fines to ensure that the mixture does not comprise significant amount of too large particles. Because of the milling, the shape or form in which the first hydrotreating catalyst is provided is not critical for the process according to the invention. The catalyst may be provided in the form of full-length extrudates or other shapes. The catalyst may also comprise damaged extrudates, or even catalyst fines, the latter possibly not even requiring milling. The process according to the invention thus advantageously offers the possibility to make use of damaged shaped catalysts or catalyst fines that otherwise would be considered waste material.

Fresh catalyst fines are often formed as an undesired side product in the process for preparing fresh catalysts. The fines can be formed in any process step wherein material moves, but are typically formed during the calcination, drying, and shaping process. Fresh extrudates that do not meet the requirements in terms of dimension or shape may also be used in the process according to the invention. Used catalyst extrudates are damaged due to mechanical damage during transport of the extrudates, mechanical damage during the loading and unloading of the reactor, mechanical attrition of the catalyst and/or repeated harsh reaction conditions during the hydrotreating and/or during regeneration which compromise on the desired extrudate length. Used catalyst fines are also formed under these conditions.

In a preferred embodiment, the starting material comprises extrudates that are damaged or do not meet length specifications that have been regenerated and/or used catalyst fines that have been regenerated. These materials, independent of the material catalytic activity, cannot be used by refiners.

The catalyst fines are mixed with a binding agent to form a mixture. The binding agent may comprise any material that can bind the catalyst fines and is typically chosen from the conventional inorganic oxides, e.g., alumina, silica, silica-alumina, alumina with silica-alumina dispersed therein, silica-coated alumina, magnesia, zirconia, boria, and titania, as well as mixtures of these oxides. The binding agent may also comprise a precursor to any of these conventional inorganic oxides which, upon heat treatment, can form the inorganic oxide. For example, boehmite may be used as a binding agent, which is a precursor for gamma-alumina. The process of the invention does not necessarily need to reproduce the chemical composition of the first hydrotreating catalyst. However, generally, preference is given to a binding agent that is similar to a binding material or carrier in the first hydrotreating catalyst, *i.e.* to a binding material that is also present in the catalyst fines, to create a homogeneous mixture and thus a homogeneous resulting extrudate. Furthermore, a purpose of using a binding agent that is also already present in the catalyst fines is to produce an extrudate with chemical properties that resemble the first hydrotreating catalyst.

The mixture comprises at least 30 wt% of catalyst fines based on the dry weight of the mixture. In a preferred embodiment, the mixture comprises at least 50 wt% of catalyst fines based on the dry weight of the mixture, preferably at least 60 wt%, more preferably at least 70 wt%, even more preferably at least 80 wt%, most preferably at least 90 wt%. A higher content of catalyst fines in the mixture means that the final catalyst that is prepared in the process according to the invention comprises a higher content of recycled catalyst material. Furthermore, a high content of catalyst fines in the final catalyst of the invention also means that the final catalyst has a higher metal content, because the binding agent does not comprise metals. A higher metal content contributes to a higher hydrotreating activity.

In a further aspect, the invention provides a process for preparing a hydrotreating catalyst wherein the mixture comprises 100% catalyst fines based on the dry weight of the mixture. This means that the binding agent does not comprise dry material, but may comprise a peptizing acid and/or water.

The binding agent and catalyst fines form a mixture that can be shaped in an extruder. A suitable extrusion mixture typically requires some moisture. Therefore the binding agent typically comprises some water. The binding agent may also comprise peptizing agents such as acids, e.g. nitric acid or acetic acid. The mixture may further comprise extrusion aids such as clay, cellulose or surfactants, which are typically present in amounts of 5 wt% or less (based on the dry weight of the mixture).

Prior to shaping or extruding, the moisture content (LOI = loss on ignition) of the mixture may be adjusted if required. A too high LOI may negatively influence the sticking properties of the material, thereby creating weak extrudates that easily fall apart. A too low LOI results in extrudates which are weak, too short, will contain cracks, will have a reduced porosity, and/or will not have a smooth surface, which is undesirable. Adjusting the moisture content or LOI of a mixture is within the common knowledge of the skilled worker and may simply involve the addition of water or acid or controlled evaporation. Determining a suitable moisture content or LOI for extrusion is within the common knowledge and skills of the skilled person. A suitable LOI for extrusion mixtures is also equipment specific. As a general rule, the moisture content should be approximately equal to the desired/targeted total pore volume of the mixture.

After extrusion, the shaped mixture is heat treated to dry the catalyst and, in for example the case of alumina, change the phase of the binder material in a carrier to, e.g., a gamma, theta, or eta-alumina. The shaped mixture is typically heat treated at a temperature in the range of 300 °C to 900 °C, preferably between 400 °C and 800 °C, more preferably between 450 °C and 650 °C. Heat treatment may be carried out in two steps e.g. a drying step between 80 °C and 150 °C and a heat-treatment step at the elevated temperature, but may also be carried out in one step.

In an embodiment according to the invention, a high content of catalyst fines and thus relatively low content of binding agent may advantageously be heat-treated in one step.

The heat-treated shaped mixture is then contacted with a rejuvenating agent. The rejuvenating agent comprises a complexing agent and may comprise an organic additive having a boiling point in the range of 80-500°C and a solubility in water of at least 5 grams per liter.

The result of contacting with a rejuvenating agent is indicated by a decrease of the crystalline fraction of the metals in the catalyst expressed as a wt%. In particular, the decrease of crystalline fraction in a catalyst is measured with X-ray diffraction and is indicated in the decrease of area of the $\beta$-CoMoO$_4$ reflection at 26.4° 2theta for Cu-ka radiation against a standard with a known amount of beta cobalt molybdate and/or the decrease of the $\beta$-NiMoO$_4$ reflection at 26.58° 2theta.

The complexing agent and the organic additive are incorporated into the catalyst in the liquid form by impregnation. For the complexing agent this will generally mean it being in the dissolved state. For the organic additive, whether or not a solvent is necessary will depend on its properties. If the organic additive is sufficiently fluid to enter the catalyst's pores without a solvent being present, a solvent can be dispensed with. Generally, however, a solvent will be used. The solvent generally is water, although other compounds, such as methanol, ethanol, and other protic solvents may also be suitable, depending on the nature of the additive and/or the complexing agent.

If solvent has been used to incorporate the additive and/or the complexing agent into the catalyst, the catalyst may be dried after the impregnation step has been completed to remove at least part of the solvent, generally around 10%, (in weight percent relative to the original weight of the compound) for example to create a free flowing powder. It is essential to the process according to the invention that any drying step is effected in such a manner that at least part of the additive and/or complexing agent remains on the catalyst. The catalyst is hence not calcined. In consequence, the drying conditions to be applied depend heavily on the temperature at which the specific additive boils or decomposes. In the context of the present invention, the drying step should be carried out under such conditions that at least 50%, preferably 70 %, more preferably 90% of the additive incorporated into the catalyst in the impregnation step is still present in the catalyst after the drying step. Of course, it is preferred to keep as much additive as possible in the catalyst during the drying step, but with the more volatile compounds evaporation during the drying step cannot always be avoided. The drying step may, e.g., be carried out in air, under vacuum, or in inert gas. Generally, it is advantageous to have a drying temperature below 220°C, although a higher or lower temperature may be necessary, depending on the nature of the additive.

The complexing agent and the organic additive may be incorporated into the catalyst simultaneously or sequentially in no particular order. For reasons of efficiency, it is preferred that they are incorporated into the catalyst simultaneously.

The complexing agent is usually an organic acid. In the context of the present specification, an organic acid is defined as a compound comprising at least one carboxylic group (COOH). The organic acid preferably comprises at least one carboxylgroup and 1-20 carbon atoms (carbon atoms in the carboxyl group(s) included). Within this definition, various groups of complexing agents may be distinguished.

A first group of complexing agents, at this point in time preferred, are the organic acids selected from acetic acid, citric acid, malic acid, maleic acid, formic acid, glycolic acid, hydroxypropionic acid, hydroxybutyric acid, hydroxyhexanoic acid, lactic acid, tartaric acid, glyceric acid, gluconic acid, oxalic acid, malonic acid, polyacrylic acid and ascorbic acid. Within this group, citric acid and lactic acid are preferred. Lactic acid is particularly preferred.

A second group of complexing agents are N-containing acids like EDTA and CyDTA (1,2,-cyclohexanediaminetetra-acetic acid) etc.

The organic additive that may be used in combination with complexing agent in the process according to the invention is an organic compound, viz. a compound comprising at least one carbon atom and at least one hydrogen atom, with a boiling point in the range of 80-500°C and a solubility in water of at least 5 grams per liter at room temperature (20°C) (atmospheric pressure). The additive may be an oxygen- or nitrogen-containing compound.

The boiling point of the organic additive is preferably in the range of 100-400°C, more preferably 150-350°C. The boiling point of the additive is balanced based on the desire that the additive remain on the catalyst during the preparation process, including the optional drying and optional ageing step. During catalyst use in the hydrotreating process or during the sulfidation process, it may occur that at least some additive is removed from the catalyst. In case the organic additive has no boiling point but instead decomposes in the specified temperature range, the term boiling point is meant to be synonymous with the decomposition temperature.

The solubility of the additive is at least 5 grams per liter at room temperature, preferably at least 10 grams. It is noted that the solubility requirement for the additive has a two-fold basis. In the first place, compounds meeting this solubility requirement are convenient to apply in impregnation solutions. Additionally it has appeared that compounds which meet these solubility requirements somehow interact with the metal components present in the catalyst leading to an increase in activity of the final product.

Within this definition, various groups of additives may be distinguished.

A first group of additives is the group of organic compounds comprising at least two oxygen atoms and 2-20 carbon atoms, preferably 2-10 carbon atoms and the compounds built up from these compounds. Organic compounds selected from the group of compounds comprising at least two oxygen-containing moieties, such as a carboxyl, carbonyl or hydroxyl moieties, and 2-10 carbon atoms and the compounds built up from these compounds are preferred. Examples of suitable compounds include butanediol, pyruvic aldehyde, glycolic aldehyde, and acetaldol.

A second group of additives, at this point in time preferred, is the group of additives that is selected from the group of compounds comprising at least two hydroxyl groups and 2-10 carbon atoms per molecule, and the (poly)ethers of these compounds. Suitable compounds from this group include aliphatic alcohols such as ethylene glycol, propylene glycol, glycerin, trimethylol ethane, trimethylol propane, etc. Ethers of these compounds include diethylene glycol, dipropylene glycol, trimethylene glycol, triethylene glycol, tributylene glycol, tetraethylene glycol, tetrapentylene glycol. This range can be extrapolated to include polyethers like polyethylene glycol. Other ethers which are suitable for use in the present invention include ethylene glycol monobutyl ether, diethylene glycol monomethyl ether, diethylene glycol monoethyl ether, diethylene glycol monopropyl ether, and diethylene glycol monobutyl ether. Of these, ethylene glycol, diethylene glycol, triethylene glycol, tetraethylene glycol, proplylene glycol, dipropylene glycol, and polyethylene glycol with a molecular weight between 200 and 600 are preferred. Another group of compounds comprising at least two hydroxyl groups and 2-10 carbon atoms per molecule are the saccharides. Preferred saccharides include monosaccharides such as glucose and fructose. Ethers thereof include disaccharides such as lactose, maltose, and saccharose. Polyethers of these compounds include the polysaccharides. The organic compounds of this group are preferably substantially saturated, as is evidenced by a iodine number of less than 60, preferably less than 20.

A third group of organic additives suitable for use in the present invention are those compounds comprising at least one covalently bonded nitrogen atom and at least one carbonyl moiety. This type of organic compound preferably comprises at least two carbonyl moieties. It is preferred that at least one carbonyl moiety is present in a carboxyl group. It is furthermore preferred that at least one nitrogen atom is covalently bonded to at least two carbon atoms. A preferred organic compound satisfies formula (I) or (II)

$$(R1R2)N - R3 - N(R1'R2') \quad (I)$$

$$N(R1R2R1') \quad (II)$$

wherein R1, R2, R1' and R2' are independently selected from alkyl, alkenyl, and allyl, with up to 10 carbon atoms optionally substituted with one or more groups selected from carbonyl, carboxyl, ester, ether, amino, or amido. R3 is an alkylene group with up to 10 carbon atoms which may be interrupted by -O- or -NR4-. R4 is selected from the same group as indicated above for R1. The R3 alkylene group may be substituted with one or more groups selected from carbonyl, carboxyl, ester, ether, amino, or amido. As has been set out above, it is essential that the organic compound of formula (I) or (II) comprises at least one carbonyl moiety.

Preferably, at least two of R1, R2, R1' and R2' (formula (I)) and at least two of R1, R2 and R1' (formula (II)) have the formula - R5 - COOX, wherein R5 is an alkylene group having 1-4 carbon atoms, and X is hydrogen or another cation, such as an ammonium, sodium, potassium and/or lithium cation. If X is a multivalent cation, one X can adhere to two or more - R5 - COO groups. Typical examples of a compound of formula (I) are ethylene diamine(tetra)acetic acid (EDTA), hydroxyethylene diamine triacetic acid, and diethylene triamine pentaacetic acid. A typical example of a compound of formula (II) is nitrilotriacetic acid (NTA). For reasons of solubility, the salts of these compounds may be preferred.

It is noted that the above-mentioned description of the organic additive encompasses various acidic components. Where in the context of the present invention the combination of an organic acid and an organic additive is discussed, this means that (at least) two different compounds are used wherein one is an acid and wherein the other meets the requirements as to solubility and boiling point placed on the organic additive. The latter compound may or may not also be acidic.

It is furthermore noted that the above-mentioned description of the solvents encompasses various compounds that also meet the description of the organic additives. Where in the context of the present invention the combination of a solvent and an organic additive is discussed, this means that (at least) two different compounds are used wherein one is a solvent and wherein the other meets the requirements as to solubility and boiling point placed on the organic additive. The latter compound may or may not also be acidic.

From an environmental point of view, it is preferred to employ organic additives which are essentially free of sulfur. Further, sulfur-containing additives generally are not stable in relation to oxygen. Therefore, if sulfur-containing additives were to be employed, all subsequent process steps would have to be carried out under an inert atmosphere. Also for this reason it is preferred to employ sulfur-free additives. This goes both for the acid and for the organic additive.

A single compound as well as a combination of compounds may be used as organic additive.

If both a complexing agent and an additive are used, the total amount of complexing agent and additive used in the process according to the invention, is at least 0.01, preferably at least 0.05, more preferably at least 0.1 mole of total of complexing agent and additive per mole of the total of Group VI and Group VIII metals. There is no specific upper limit to the total amount of complexing agent and additive added as it is no problem to provide an excess amount. The skilled person can find the optimum amount needed to achieve the optimum rejuvenation effect. Suitable molar ratios can be at most 3, preferably at most 2.

If an organic acid is used as complexing agent, the amount of acid is generally between 0.01 and 1 mole per mole of total of Group VI and Group VIII metals, preferably between 0.05 and 0.5 mole per mole of total of Group VI and Group VIII metals.

The amount of organic additive is generally between 0.1 and 2,5 mole per mole of total of Group VI and Group VIII metals, preferably between 0.15 and 1 mole per mole of total of Group VI and Group VIII metals, more preferably between 0.2 and 1 mole per mole of total of Group VI and Group VIII metals.

If the rejuvenating agent comprises both a complexing agent and an organic additive, the molar ratio between complexing agent and additive is generally 0.01-10:1, preferably 0.1-5:1, more preferably 0.15-3:1.

In general, if the total amount of rejuvenating agent added is too low, the advantageous effect of rejuvenation will not be obtained. As will be clear to the person skilled in the art, the exact amount of rejuvenating agent to be used in a specific situation will depend upon a variety of parameters including the metals content of the catalyst, the pore volume and pore size distribution of the catalyst, the nature of the rejuvenating agent, the solvent to be used in the impregnation solution, the impregnation conditions, etc. It is well within the scope of the person skilled in the art to determine the optimum amount of rejuvenating agent to be used in each specific situation, taking the above-mentioned variables into account.

In a preferred embodiment of the process of the invention, the heat-treated shaped mixture is subjected to an ageing step after the incorporation of the rejuvenating agent. The ageing step is effected while the catalyst is still wet, that is, before the solvent is removed from the catalyst. The ageing time applied in the ageing step is a function of temperature. Generally, the ageing time decreases with increasing ageing temperature. The ageing step typically takes at least 15 minutes. After a certain time, for example after more than 48 hours, no additional activity improvement is observed. If the ageing step is carried out at a temperature between 0° and 50°C, the ageing time is typically at least 1 hour, may be at least 2 hours, or may be at least 6 hours. If the ageing step is carried out at a temperature above 50°C, the ageing time is generally at least 0.5 hours, may be at least 1 hour, or may be at least 2 hours. It is also possible to effect the ageing step at a temperature of above 100°C under hydrothermal conditions for a period of over 15 minutes. The ageing step can also be performed by heating the catalyst with microwaves or induction heating.

Preferably, the catalyst composition is aged for a time sufficient to reduce the crystalline fraction below 5 wt percent, more preferably below 2.5 wt%. It was further found, that the time of ageing can be considerably reduced and/or significantly better results can be achieved if in the process according to the invention the complexing agent concentration is at least 5 wt %, preferably at least 7 wt%, most preferably at least 10 wt % (relative to the total weight of the catalyst).

According to an embodiment of the invention, the rejuvenated mixture is suitable for transport in its wet state. No drying is required for transport. The drying may thus take place in-situ in the hydrotreating process.

In a further aspect according to the invention, the process further comprises a step of contacting the heat-treated shaped mixture with a solution comprising group VI and/or group VIII metals, wherein said step may take place before, during or after contacting the heat-treated shaped mixture with the rejuvenating agent.

In a preferred embodiment, the heat-treated shaped mixture is contacted with one solution comprising both the rejuvenating agent and the group VI and/or group VIII metals.

In another aspect of the invention, group VI and/or group VIII metals may be added to the mixture prior to shaping the mixture. After shaping, the shaped mixture may then be subjected to a heat-treating step and/or a rejuvenation step (i.e. contacting the heat-treated shaped mixture with a rejuvenating agent).

When mixing the catalyst fines with a binding agent to form a mixture that can be shaped and heat-treated, the metal concentration is diluted. Since the activity is related to the amount of metal in the catalyst material, diluting the first hydrotreating catalyst fines with the binding agent reduces the activity of the final hydrotreating catalyst as well, which will thus also be lower than the activity that could be expected for the fresh catalyst. It is an object of the invention to revive the activity of catalyst material as much as possible, with the preferred goal of achieving at least 60% of the activity of the corresponding fresh hydrotreating catalyst, preferably at least 75%, more preferably at least 85%, even more preferably at least 90%. Therefore, it is advantageous to impregnate the heat-treated shaped mixture with a solution comprising group VI and/or group VIII metals.

The solution may preferably comprise the metals in an amount and mutual ratio to restore the metal content of the first hydrotreating catalyst. In other words, when the mixture comprises 80 wt% of catalyst fines based on the dry weight, the metal concentration in the shaped heat-treated mixture will be 80% compared to the metal concentration in the first hydrotreating catalyst. In a preferred embodiment, the impregnation solution comprises the metals in an amount such that after contacting with the solution comprising group VI and/or group VIII metals, the heat-treated shaped mixture comprises a metal concentration of at least 90 wt% of the metal concentration in the first hydrotreating catalyst, preferably at least 95 wt%, more preferably at least 98 wt%.

According to another aspect of the invention, the impregnation solution comprises the metals in an amount such that after contacting, the heat-treated shaped mixture comprises a metal concentration of more than 100 wt% of the metal concentration in the first hydrotreating catalyst. This may be advantageous in view of improved catalyst activity revival.

According to another aspect of the invention, it is possible to use group VI or group VIII metals in the solution that are different than the metals present in the first hydrotreating catalyst, use only one of the metals, or use the metals in a different ratio. Varying the nature or ratios of the metals may influence the activity or selectivity of the final catalyst in the hydrotreating process.

According to another aspect, the invention relates to the hydrotreating catalyst that is obtainable by the process according to the invention.

This hydrotreating catalyst is characterized by a total pore volume of 0.2 to 1.0 mL/g, preferably 0.3-0.6 mL/g.

The hydrotreating catalyst obtainable by the process according to the invention has a typical macropore volume of 0.005-0.3 mL/g, preferably the macropore volume is less than 0.06 mL/g. Herein, pores with a diameter larger than 100 nm are considered macropores.

The hydrotreating catalyst obtainable by the process according to the invention has a surface area of 100-300 m$^2$/g.

The hydrotreating catalyst obtained or obtainable by the process of the invention may be subjected to a drying step and may be subjected to a sulfiding step before it is used in the hydrotreating of hydrocarbon feeds, but, as has been explained before, this is not necessary. If it is decided to sulfide the catalyst before use, this can be done in one of the ways known in the art. For example, it is possible to contact the catalyst with inorganic or organic sulfur compounds, such as hydrogen sulfide, elemental sulfur, or organic polysulfides, or to sulfide the catalyst by contacting it with a hydrocarbon feed to which a sulfur compound has been added. All of this will be known to the skilled person as catalyst sulfiding or presulfiding.

The present catalysts can be used in the hydrotreating of a wide range of feeds. Any feed comprising hydrocarbons is suitable to effect one or more of hydrodesulfurisation, hydrodenitrogenation, and hydrodearomatisation. Examples of suitable feeds include petroleum cuts, cuts resulting from coal, or hydrocarbons produced from natural gas, optionally as mixtures, or also from a hydrocarbon cut resulting from biomass and include but are not limited to gasolines, gas oils, vacuum gas oils, middle distillates, naphta, atmospheric residues, vacuum residues, atmospheric distillates, vacuum distillates, heavy fuel oils, oils, waxes and paraffins, spent oils, deasphalted residues or crudes, feedstocks originating from thermal or catalytic conversion processes, lignocellulose feedstocks or, more generally, feedstocks resulting from biomass, organic waste feeds, vegetable (waste) feeds, taken alone or as a mixture. The feedstocks which are treated, and in particular those mentioned above, generally contain heteroatoms, such as sulfur, oxygen and nitrogen, and, for the heavy feedstocks, they usually also contain metals. The catalyst is particularly suitable for use in ultra-deep hydrodesulfurisation, viz. hydrodesulfurisation to a product suphur content below 200 ppm, more in particular to product sulfur content below 50 ppm. The conventional process conditions, such as temperatures in the range of 250°-450°C, pressures in the range of 5-250 bar, space velocities in the range of 0,1-10 h-1, and H2/oil ratios in the range of 50-2000 Nl/l, can be applied here.

The present invention will be further illustrated using the examples below. In the examples, reference is made to figures.

## V. Examples

A batch of commercial used hydrotreating catalysts comprising cobalt and molybdenum (CoMo) was regenerated. During this regeneration, a fraction of dust and too short extrudates were sieved off. This fraction of regenerated catalyst was collected and brought to the labs for catalyst preparation. The regenerated catalyst was milled to obtain catalyst fines with a particle size distribution with d50 = 17.6 $\mu$m and 99.8% of the volume consisting of particles with a diameter less than 64.6 $\mu$m. The catalyst fines contained 4 wt% CoO, 24 wt% $MoO_3$ and 2 wt% $P_2O_5$ supported on $\gamma$-$Al_2O_3$.

## Comparative Example 1

An Eirich mixer was used to perform a three-step mixing recipe. First, 10334 g aqueous solution of $HNO_3$ (1.8 wt%) was added to a mix of 4393 g of spray dried alumina and 6645 g of catalyst fines while mixing at 200 rpm. Mixing was then continued at 800 rpm until densification was observed by a peak in power uptake. Then 3629 g of catalyst fines were added and mixing continued until densification was again observed by a peak in power uptake. In the last step 3069 g of catalyst fines were added together with 48 g of a modified cellulose extrusion aid and mixing was continued at 600 rpm for a set time of 5 minutes. This results in a mix which contains 80 wt% of catalyst fines based on the dry mixture.
The extrusion as carried out using a ZSK-32 extruder. The extrusion resulted in visually good, long extrudates. The extrudates were dried in the drying room at 120 °C for a minimum of 3 hours and calcined at 450 °C for 1 h. The resulting extrudates are herein further referred to as the carrier material. Properties of the carrier extrudates are listed in Table 1.

Table 1. Carrier material properties after extrusion.

| | |
|---|---|
| Regenerated fines (wt%) | 80 |
| Optional extrusion aid | Yes |
| Product Calcination T (°C) | 450 |
| PoreVolume water (mL/g) | 0.51 |
| Median pore diameter (nm) | 11.8 |
| Surface area ($m^2$/g) (pretreated for analysis at 450 °C) | 213 |
| Side crushing strength (lbs/mm) | 5.16 |

## Reference catalysts 1

A freshly prepared batch of the commercial hydrotreatment catalyst was used as reference catalyst for their hydrodesulfurization (HDS) and hydrodenitrogenation (HDN) activity in the hydrotreating process. The reference catalyst comprises 4 wt% CoO, 24 wt% $MoO_3$ and 2 wt% $P_2O_5$ supported on $\gamma$-$Al_2O_3$.

## Examples 1-3: Impregnation of the Carrier with Citric Acid and Diethylene glycol

In each example according to the invention, the carrier according to comparative example 1 was impregnated with 95% of the pore volume.
Example 1: The carrier according to comparative example 1 was impregnated with an organic solution containing citric acid (CA) and diethylene glycol (DEG), to end up with 5.5 wt% CA and 11 wt% DEG on the final catalyst, based on the dry weight of the final catalyst. The desired quantity of the solution, 12.60 mL (consisting of 2.96g CA (50 wt% solution in water) + 3.13g DEG + 7.42g water) was poured over 26.0g wb (wb=wet base) carrier (25.66 gram dry base) while mixing. The impregnated extrudates were aged at conditions shown in Table 2.
Examples 2-3: The same procedure and equivalent amounts as in example 1 were followed. The solution (consisting of 2.39 g CA (50 wt% solution in water) + 2.53 DEG + 5.99 g water) was poured over 21.0 g wb carrier according to comparative example 1, while mixing to end up with 5.5 wt% CA and 11 wt% DEG on the dry base final catalyst. The impregnated extrudates were aged at conditions shown in Table 2.

## Examples 4-6: Impregnation of the Carrier with Citric Acid, Diethylene glycol and Metals

Example 4: The carrier according to comparative example 1 was impregnated with a solution containing CA, DEG and Co, Mo and P metals to achieve the targeted final composition of 24 wt% $MoO_3$, 4 wt% CoO and 2 wt% $P_2O_5$

with 5 wt% CA and 10 wt% DEG based on the dry weight of the final catalyst. The CoMoP solution was prepared by adding cobalt hydroxy-carbonate, molybdenum oxide and phosphoric acid as raw materials to water. 26 g wb carrier according to comparative example 1 was impregnated with 12.60 ml solution, consisting of 6.12 g metal sol + 2.96 g CA (50wt% solution in water) + 3.13 g DEG + 3.44 g water. The solution of CA-DEG-CoMoP solution was poured over the extrudates while stirring. The impregnated extrudates were aged at conditions shown in Table 2.

Examples 5-6: The same procedure, equivalent amounts and targeted final composition as in example 4 were followed: The solution, 10.71 mL (consisting of 4.94 g metal solution + 2.39 g CA (50 wt% solution in water) + 2.53 g DEG + 2.78 g water) was poured over 21.0 g wb carrier according to comparative example 1 while stirring. The impregnated extrudates were dried and aged at conditions shown in Table 2.

Examples 7-9: Impregnation of the Carrier with Lactic Acid

Example 7: The carrier according to comparative example 1 (water PV 0.51) was impregnated with a solution containing lactic acid to end up with 22 wt% of Lactic acid on the end catalyst. 12.6 mL (95% pore volume) of the solution (consisting 7.96 gram lactic acid (88% content of lactic acid) + 6.00 gram water) was poured over 26 g wb of the carrier extrudates according to comparative example 1 (25.7 gram db) while stirring. The impregnated extrudates were aged at conditions shown in Table 2.

Examples 8-9: The same procedure as in Example 7 was followed: 10.17 mL of the solution (consisting of 6.43 g lactic acid + 4.84 g water) was poured over 21 g wb carrier according to comparative example 1 to end up with 22 wt% lactic acid on the final catalyst based on the dry weight of the final catalyst. The impregnated extrudates were aged at conditions shown in Table 2.

Examples 10-12: Impregnation of the Carrier with Lactic Acid and Metals

Example 10: The carrier according to comparative example 1 (water pore volume = 0.51 ml/g) was impregnated (95% pore volume) with a solution containing lactic acid and Co, Mo and P metals. The targeted final composition was 24 wt% $MoO_3$, 4 wt% CoO and 2 wt% $P_2O_5$ and 20 wt% Lactic acid. The CoMoP solution was prepared using cobalt hydroxy-carbonate, molybdenum oxide and phosphoric acid as raw materials. The raw materials were combined in water. 26 g wb (water pore volume = 0.51 ml/g) carrier according to comparative example 1 was impregnated with 12.60 ml (95% pore volume) solution, consisting of 6.12 g metal solution + 7.91 g lactic acid (88%) + 2.02 g water. The solution of metals + lactic acid solution was heated until a clear solution was obtained and poured over the extrudates while stirring. The impregnated extrudates were aged at conditions shown in Table 2.

Examples 11-12: The same procedure and equivalent amounts as in example 10 was followed. 21.0 g wb carrier according to comparative example 1 was impregnated with 4.94 g metal solution + 6.43 g lactic acid (88%) + 1.63 g water. The impregnated extrudates were aged at conditions shown in Table 2.

Table 2: Drying and Ageing conditions for examples 1-12. All samples were dried and/or aged to achieve an LOI of 25 wt%.

| Example | Metal content based on the dry final catalyst | | | Condition | |
| | MoO3 wt% | CoO wt% | $P_2O_5$ wt% | Ageing 60 °C/t | Drying 80 °C/t |
| --- | --- | --- | --- | --- | --- |
| 1 | - | - | - | 45min | No drying |
| 2 | - | - | - | 18 h | 1 h |
| 3 | - | - | - | 45min | 1 h |
| 4 | 24 | 4.4 | 2.3 | 45min | No drying |
| 5 | 24 | 4.4 | 2.3 | 18 h | 1 h |
| 6 | 24 | 4.4 | 2.3 | 45min | 1 h |
| 7 | - | - | - | 45 min | No drying |
| 8 | - | - | - | 18 h | 1 h |
| 9 | - | - | - | 45 min | 1 h |
| 10 | 24 | 4.4 | 2.3 | 45 min | No drying |
| 11 | 24 | 4.4 | 2.3 | 18 h | 1 h |

(continued)

| Example | Metal content based on the dry final catalyst | | | Condition | |
|---|---|---|---|---|---|
| | MoO3 wt% | CoO wt% | $P_2O_5$ wt% | Ageing 60 °C/t | Drying 80 °C/t |
| 12 | 24 | 4.4 | 2.3 | 45 min | 1 h |

XRD measurements

All XRD measurements were carried out using a Bruker D4Endeavor XRD apparatus. The effect of impregnations on the decrease of crystalline phase is indicative of the redistribution of the active phase. A quantitative determination of the amount of crystalline $\beta$-CoMoO$_4$ that is present on the carrier in comparative example 1 and on the impregnated catalysts according to examples 1-12 was done using X-ray diffraction. The crystalline fraction of $\beta$-CoMoO$_4$ in a sample (expressed as weight percentage) is determined from the X-ray diffraction pattern, by evaluating the net peak area of the strongest reflection of beta cobalt molybdate at about 26.4° 2theta for Cu-ka radiation against a standard with a known amount of beta cobalt molybdate.

For the samples impregnated using CA+DEG (with metals and without metals) the relative amount of $\beta$-CoMoO$_4$ is in the range 2.7- 3.5 wt% showing reduction of crystalline CoMoO$_4$ after the impregnation on the carrier according to comparative example 1 ($\beta$-CoMoO$_4$ = 5.6). For the samples impregnated using lactic acid (with 20% metals and without metals) the relative amount of CoMoO$_4$ is in the range 0.7- 1.8%, showing a stronger reduction of $\beta$-CoMoO$_4$ after the impregnation on the revolve carrier ($\beta$-CoMoO$_4$ = 5.6%). For all examples, the decrease in the crystalline oxide phase indicates an acceptable redistribution of the active phase. The results of the XRD measurements are listed in Table 3.

Table 2. Quantitative estimation by XRD of $\beta$-CoMoO$_4$ phase in the catalysts prepared according to examples 1-12 and comparative example 1.

| Example | Final Catalyst | $\beta$-CoMoO$_4$ |
|---|---|---|
| CE 1 | Carrier | 5.6 |
| 1 | 5.5 wt% CA + 11 wt% DEG | 2.7 |
| 2 | 5.5 wt% CA + 11 wt% DEG | 3.3 |
| 3 | 5.5 wt% CA + 11 wt% DEG | 3.2 |
| 4 | 20% CoMoP + 5 wt% CA + 10 wt% DEG | 3.3 |
| 5 | 20% CoMoP + 5 wt% CA + 10 wt% DEG | 3.5 |
| 6 | 20% CoMoP + 5 wt% CA + 10 wt% DEG | 3.5 |
| 7 | Lactic acid (22wt%) | 0.7 |
| 8 | Lactic acid (22wt%) | 0.8 |
| 9 | Lactic acid (22wt%) | 0.9 |
| 10 | 20% Metals + Lactic acid (20wt%) | 1.1 |
| 11 | 20% Metals + Lactic acid (20wt%) | 1.5 |
| 12 | 20% Metals + Lactic acid (20wt%) | 1.8 |

Activity measurements

The catalysts from examples 1-12, and reference catalyst 1 were tested for their hydrodesulfurization (HDS) and hydrodenitrogenation (HDN) activity under medium pressure Ultra Low Sulfur Diesel conditions, which are indicated in Table 4. Samples were tested at an equal dense loading CBD (compacted bulk density) as their respective references (fresh CoMo commercial catalyst according to reference example 1).

Table 4. Presulfiding and test conditions

| STEP | Soak | Ramp 1 | Presulf iding step 1 | Ramp2 | Presulf iding step 2 | Cond 1 | Cond2 | Cond3 | Cond4 |
|---|---|---|---|---|---|---|---|---|---|
| Feed | S-spiked Feed | S-spiked Feed | S-spiked Feed | S-spiked Feed | S-spiked Feed | VGO | VGO | VGO | VGO |
| T(°C) | 21 | 250 | 250 | 320 | 320 | 310 | 335 | 335 | 335 |
| Liquid hourly space velocity (LHSV) (1/h) | 3 | 3 | 3 | 3 | 3 | 3 | 3 | 1.2 | 1 |
| H$_2$/oil (normal liter H$_2$/liter oil) | 300 | 300 | 300 | 300 | 300 | 300 | 300 | 300 | 300 |
| P (bar) | 45 | 45 | 45 | 45 | 45 | 45 | 45 | 45 | 45 |
| Time (hrs) | 3 | 7.6 | 8 | 3.5 | 5 | 72 | 96 | 96 | 48 |

The diesel feedstock had the properties as shown in Table 5

Table 3. Feedstock properties

| Nitrogen | mg/kg | 178 |
|---|---|---|
| Sulfur (XRF) | mg/kg | 8890 |
| Density at 60F | g/ml | 0.8566 |
| 1 wt% | °C | 99 |
| 5 wt% | °C | 172 |
| 10 wt% | °C | 205 |
| 50 wt% | °C | 291 |
| 95 wt% | °C | 377 |
| 99 wt% | °C | 434 |

The test results of the catalysts in examples 1-12 and the fresh reference catalyst are listed in Table 6.

Table 6.: Relative volume activities: The reference catalyst 1 is set on 100 % per definition. All examples are compared and calculated relative to this reference catalyst.

| Catalysts example number: | T/ °C | P/bar | RVA-HDS (ppm S) | RVA-HDN (ppm N) |
|---|---|---|---|---|
| Reference Catalyst 1 | 335 | 45 | 99.9 | 100.1 |
| 1 | 335 | 45 | 69.2 | 55.6 |
| 2 | 335 | 45 | 59.3 | 44.4 |
| 3 | 335 | 45 | 57.1 | 43.2 |
| 4 | 335 | 45 | 84.7 | 88.9 |
| 5 | 335 | 45 | 78.3 | 82.3 |
| 6 | 335 | 45 | 71.2 | 70.9 |
| 7 | 335 | 45 | 60.1 | 48.9 |
| 8 | 335 | 45 | 64.4 | 54 |
| 9 | 335 | 45 | 62.9 | 53.2 |

(continued)

| Catalysts example number: | T/ °C | P/bar | RVA-HDS (ppm S) | RVA-HDN (ppm N) |
|---|---|---|---|---|
| 10 | 335 | 45 | 85.6 | 92.6 |
| 11 | 335 | 45 | 89.9 | 97.1 |
| 12 | 335 | 45 | 84.1 | 93.9 |
| 13 | 335 | 45 | 64.5 | 57.3 |

The test results (HDS and/or HDN volume activity) of the catalysts according to the invention and the fresh commercial catalysts show that the catalysts revived using CA+DEG can regain HDS activity up to 57-85% of the commercial catalyst.

The test results (HDS and/or HDN volume activity) of the catalysts according to the invention and the fresh commercial catalysts show that the catalysts revived using Lactic acid can regain HDS activity up to 60-90% of the commercial catalyst.

Example 13: Impregnation of the Carrier with Metals without Rejuvenating Agent

21 g of the wb carrier according to comparative example 1 was impregnated with 10.15 ml (95% pore volume) of a solution Co, Mo and P metals to achieve the targeted final composition of 24 wt% $MoO_3$, 4 wt% CoO and 2 wt% $P_2O_5$. The CoMoP solution was prepared by adding cobalt hydroxy-carbonate, molybdenum oxide and phosphoric acid as raw materials to water and heating until a clear solution was obtained. The solution of CoMoP solution was poured over the extrudates while stirring. The extrudates were aged at 60 °C/6h and dried for 80 °C/1h. The crystalline $CoMoO_4$ in this case was quantified to be 5.8. This catalyst was also tested under the same conditions as mentioned in Table 4 and the test results showed only 65% RVA-HDS of the fresh catalyst.

**Claims**

1. A process for preparing a hydrotreating catalyst which process comprises

   a. providing a first hydrotreating catalyst, comprising a group VI metal and a group VIII metal, selected from the group of fresh catalyst, regenerated catalyst, rejuvenated catalyst, fresh-, regenerated-, or rejuvenated catalyst fines, or mixtures thereof;
   b. milling the first hydrotreating catalyst to form catalyst fines unless the first hydrotreating catalyst already consists of fresh-, regenerated-, or rejuvenated catalyst fines or mixtures thereof;
   c. mixing the catalyst fines with at least a binding agent to form a mixture; wherein optionally the mixing and milling is at least partially combined and wherein optionally first hydrotreating catalyst consisting of fresh-, regenerated-, or rejuvenated catalyst fines are added after milling during mixing;
   d. shaping the mixture to form a shaped mixture;
   e. heat treating the shaped mixture;

   wherein the mixture comprises at least 30 wt% of catalyst fines based on the dry weight of the mixture.

2. The process according to claim 1, wherein the process further comprises a step f. of contacting the heat-treated shaped mixture with a rejuvenating agent or wherein the process further comprises a step g. of contacting the heat-treated shaped mixture with a solution comprising group VI and/or group VIII metals or wherein the process further comprises both step f. and step g. wherein said step g. of contacting with a solution comprising metals may take place before, during, or after step f. of contacting with a rejuvenating agent.

3. The process according to claim 2, comprising a step g. wherein the solution comprises group VI and/or group VIII metals in an amount such that after contacting, the heat-treated shaped mixture comprises a metal concentration of at least 90 wt% of the metal concentration in the first hydrotreating catalyst, preferably at least 95 wt%, more preferably at least 98 wt%.

4. The process according to claim 2 or 3, wherein the step g. of contacting the heat-treated shaped mixture with a solution comprising group VI and/or group VIII metals takes place during step f. wherein the solution comprising group VI and/or group VIII metals also comprises the rejuvenating agent.

5. The process according to any of the preceding claims, wherein the first hydrotreating catalyst comprises a regenerated catalyst obtained by regenerating a spent catalyst.

6. The process according to any of the preceding claims, wherein the mixture comprises at least 50 wt% of catalyst fines based on the dry weight of the mixture, preferably at least 60 wt%, more preferably at least 70 wt%, even more preferably at least 80 wt%, most preferably at least 90 wt%.

7. The process according to any of the preceding claims, wherein the binding agent comprises an inorganic oxide, preferably alumina or alumina-silica.

8. The process according to any of the preceding claims, wherein the binding agent comprises a material that is similar to a binding material in the first hydrotreating catalyst.

9. The process according to any of the preceding claims, wherein the first hydrotreating catalyst is milled to form catalyst fines having a mean particle size of less than 200 $\mu$m, preferably less than 100 $\mu$m, more preferably less than 50 $\mu$m, even more preferably less than 30 $\mu$m.

10. The process according to any of the preceding claims, wherein the catalyst fines in the mixture have a D90 less than 500 $\mu$m, preferably less than 200 $\mu$m, more preferably less than 100 $\mu$m and even more preferably less than 80 $\mu$m.

11. The process according to any of the preceding claims, wherein the rejuvenating agent decreases the crystalline fraction of metal oxide in the heat-treated shaped mixture.

12. The process according to any of the preceding claims, wherein the rejuvenating agent comprises a complexing agent, preferably a carboxylic acid comprising at least one carboxyl group and 1-20 carbon atoms, preferably citric acid or lactic acid.

13. The process according to claims 11 or 12, wherein the rejuvenating agent comprises an organic additive, optionally in addition to a complexing agent, wherein the organic additive is preferably selected from the group of compounds comprising at least two hydroxyl groups and 2-10 carbon atoms per molecule and the ethers or polyethers of these compounds.

14. A hydrotreating catalyst obtainable by the process according to anyone of claims 1-13.

15. A process for hydrotreating a hydrocarbon feed in which a hydrocarbon feed is contacted under hydrotreating conditions with a catalyst according to claim 14 or a catalyst obtained by the process according to any of claims 1-13, which optionally has been dried and optionally has been (pre)sulfided before it is contacted with the hydrocarbon feed.

Europäisches Patentamt
European Patent Office
Office européen des brevets

## EUROPEAN SEARCH REPORT

**Application Number**

**EP 22 19 4987**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/021386 A1 (SHELL OIL CO [US]; SHELL INT RESEARCH [NL] ET AL.) 16 February 2012 (2012-02-16) * claims; examples * | 1-15 | INV. B01J23/882 B01J37/00 B01J37/04 B01J38/60 C10G45/08 |
| X | US 4 107 087 A (PESSIMISIS GEORGE N) 15 August 1978 (1978-08-15) * claims; examples * | 1-15 | |
| X | MARAFI ET AL: "Preparation of heavy oil hydrotreating catalyst from spent residue hydroprocessing catalysts", CATALYSIS TODAY, ELSEVIER, AMSTERDAM, NL, vol. 130, no. 2-4, 3 December 2007 (2007-12-03), pages 421-428, XP022398705, ISSN: 0920-5861, DOI: 10.1016/J.CATTOD.2007.10.098 * 2. experimental; figure 1 * | 1-15 | |

**TECHNICAL FIELDS SEARCHED (IPC)**

B01J
C10G

The present search report has been drawn up for all claims

| Place of search | Date of completion of the search | Examiner |
|---|---|---|
| The Hague | 6 January 2023 | Schoofs, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 4987

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2023

| Patent document cited in search report | | Publication date | Patent family member(s) | | Publication date |
|---|---|---|---|---|---|
| WO 2012021386 | A1 | 16-02-2012 | BR | 112013002989 A2 | 07-06-2016 |
| | | | CA | 2806585 A1 | 16-02-2012 |
| | | | CN | 103052443 A | 17-04-2013 |
| | | | EP | 2603317 A1 | 19-06-2013 |
| | | | JP | 5805761 B2 | 04-11-2015 |
| | | | JP | 2013538120 A | 10-10-2013 |
| | | | US | 2012205290 A1 | 16-08-2012 |
| | | | US | 2016059222 A1 | 03-03-2016 |
| | | | US | 2017312741 A1 | 02-11-2017 |
| | | | WO | 2012021386 A1 | 16-02-2012 |
| US 4107087 | A | 15-08-1978 | NONE | | |

EPO FORM P0459

For more details about this annex : see Official Journal of the European Patent Office, No. 12/82

**EP 4 335 546 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4028227 A

- EP 1680486 A